# EUROPÄISCHE PATENTSCHRIFT

(11) **EP 1 254 802 B1**
(45) Veröffentlichungstag und Bekanntmachung des Hinweises auf die Patenterteilung: **21.02.2007**
(21) Anmeldenummer: 02008344.0
(22) Anmeldetag: 12.04.2002
(51) Int. Cl.: B60K 15/063, B62D 21/18

(54) **Go-Kart**
Go-Kart
Kart

(30) Priorität: 04.05.2001 DE 20107609 U
(43) Veröffentlichungstag der Anmeldung: 06.11.2002
(73) Patentinhaber: Rimo Transportgeräte GmbH & Co. KG, 59846 Sundern (DE)
(72) Erfinder: Bertram, Peter Dipl.-Ing., 58675 Hemer (DE)
(74) Vertreter: Basfeld, Rainer

(56) Entgegenhaltungen:
- EP-A- 1 048 551
- DE-U- 29 700 456
- FR-A- 2 661 646
- GB-A- 2 299 310
- US-A- 3 096 842
- PATENT ABSTRACTS OF JAPAN vol. 014, no. 384 (M-1013), 20. August 1990 (1990-08-20) -& JP 02 144228 A (TOYOTA AUTOM LOOM WORKS LTD), 4. Juni 1990 (1990-06-04)

## Beschreibung

Die vorliegende Erfindung bezieht sich auf ein Motorkart mit einem Fahrzeugrahmen, welcher das Fahrwerk, einen Verbrennungsmotor als Antriebsmaschine sowie den Treibstofftank trägt und auf dem ein Fahrersitz angebracht ist, und an dem zumindest teilweise außen umlaufende Stoßstangen angebracht sind, siehe z.B. die gattungsbildende FR 2661646 A.

Derartige Motorkarts sind verbrennungsmotorgetriebene Sportfahrzeuge, deren tragende Konstruktion durch einen Rohrrahmen gebildet wird. Dieser Fahrzeugrahmen ist in der Regel, als etwa in der Ebene der Radachsen liegende, flache Rohrkonstruktion aus Längs- und Querrohren ausgebildet. Die Räder des Fahrzeugs sind im Front- bzw. Heckbereich seitlich vorstehend an dem Fahrzeugrahmen aufgehängt. Zwischen der Vorder- und Hinterachse sind die Längsrohre des Rahmens X-förmig zusammengeführt und bilden den Träger für den darauf montierten Fahrersitz. Neben diesem Fahrersitz befindet sich der Verbrennungsmotor zum Antrieb der Hinterachse. Der Kraftstofftank ist auf dem Motor oder vor dem Fahrersitz mittig angebracht.

Zum Schutz des Fahrwerks, d. h. der Räder bzw. Radaufhängungen sowie des Fahrers sind an dem Fahrzeugrahmen Stoßstangen angebracht. Diese bilden vorne, hinten und an den Seiten die äußerste Fahrzeugbegrenzung und bilden dadurch einen effektiven Schutz gegen seitliche und frontale Kollision mit feststehenden Hindernissen oder anderen Fahrzeugen. Diese Stoßstangen erstrecken sich ebenfalls etwa in Höhe der Fahrzeugachsen. Eine besonders stabile Konstruktion wird dadurch erreicht, dass die Stoßstangen vorne, hinten und an den Seiten zu einem außen um das Fahrzeug umlaufenden, geschlossenen Rundumschutz miteinander verbunden sind.

Im Stand der Technik ist der Kraftstofftank unmittelbar auf dem Motor oder vor dem Fahrersitz angebracht. Durch die relativ hohe Anordnung des Tanks auf dem Motor wird der Schwerpunkt des Fahrzeugs in unerwünschter Weise nach oben verlagert. Wird der Tank vor dem Fahrersitz mittig eingebaut, befindet sich der Schwerpunkt auf der Seite des relativ schweren, seitlich angebrachten Verbrennungsmotors, wodurch das Kurvenverhalten des Fahrzeugs nachteilig beeinflusst werden kann. Außerdem stört der zwischen den Beinen des Fahrers liegende Tank die Sitzposition und ist umständlich zu betanken, wobei auch die Kleidung des Fahrers verunreinigt werden kann.

Angesichts der vorangehend Problematik besteht die Aufgabe der Erfindung darin, ein Motorkart der eingangs genannten Art zur Verfügung zu stellen, welches die aus der bisherigen Anordnung des Kraftstofftanks resultierenden Nachteile vermeidet.

Zur Lösung dieser Aufgabenstellung wird erfindungsgemäß vorgeschlagen, dass der Treibstofftank seitlich zwischen dem Fahrzeugrahmen und einer seitlichen Stoßstange bzw. des Rundumschutzes untergebracht ist.

Gemäß der vorliegenden Erfindung kann der Treibstofftank in der Ebene Fahrzeugrahmens, d. h. etwa in Höhe der Achsen, in das Fahrzeug integriert werden.

Ein wesentlicher Vorteil der Erfindung besteht darin, dass der Treibstofftank zur Fahrzeugaußenseite durch die seitliche Stoßstange optimal geschützt ist. Diese Stoßstangen, welche bevorzugt als um das gesamte Fahrzeug umlaufender geschlossener Rundumschutz ausgebildet sind, haben nämlich gemäß ihrer eigentlichen Funktion eine derart hohe Steifigkeit und Widerstandsfähigkeit, dass der erfindungsgemäß dahinter angebrachte Treibstofftank gegen Beschädigung von außen optimal geschützt ist. Auf der anderen Seite des Treibstofftanks laufen die Längsrohre des Fahrzeugrahmens entlang, so dass der Treibstofftank in dieser einen Baulage praktisch allseitig von einem stabilen Sicherheitskäfig umgeben ist.

Der verbesserte Schutz des Tanks und der damit verbundene Sicherheitsgewinn wird erfindungsgemäß ohne zusätzlichen Aufwand erreicht, da im wesentlichen keine zusätzlichen Sicherheitsbügel oder dergleichen Schutzmaßnahmen erforderlich sind.

Ein weiterer Vorteil der Erfindung ist, dass der Treibstofftank nunmehr seitlich der Sitzfläche liegt. Dadurch bildet der Treibstofftank ein Gegengewicht zu dem auf der anderen Fahrzeugseite montierten Motor, so dass der Fahrzeugschwerpunkt in besonders vorteilhafter Weise etwa mittig liegt, und zwar relativ tief bezüglich des Fahrgestells. Als Folge daraus ergibt sich ein besonders gutes Kurven- und Fahrverhalten des Motorkarts. Außerdem wird die Sitzposition nicht wie durch den im Stand der Technik mittig vor dem Fahrersitz angeordneten Tank gestört. Ein Sicherheitsgewinn ergibt sich daraus, dass, selbst wenn der Kraftstofftank bei einem schweren Unfall beschädigt werden sollte, gewährleistet ist, dass kein Kraftstoff auf erhitzte Teile des auf der anderen Seite liegenden Motors gelangt.

Dadurch wird die Brand- bzw. Explosionsgefahr deutlich verringert und entsprechend die Sicherheit des Fahrers erhöht.

Besonders vorteilhaft ist es, dass der Treibstofftank in einem Seitenkasten integriert ist bzw. alternativ der Seitenkasten selbst als Treibstofftank ausgebildet ist. Als Seitenkästen werden Verkleidungsteile bezeichnet, mit denen im Stand der Technik der seitliche Zwischenraum zwischen dem Fahrersitz und der seitlich umlaufenden Stoßstange überbrückt bzw. geschlossen wird. Durch den erfindungsgemäßen Tank erhalten diese Seitenkasten nun eine vorteilhafte Zusatzfunktion als Kraftstofftank.

Der Treibstofftank wird dadurch an die erfindungsgemäße Einbaulage besonders gut angepasst, dass er eine langgestreckte Bauform hat. Dadurch kann der zur Verfügung stehende Einbauraum zwischen dem Fahrzeugrahmen auf der Innenseite und der Stoßstange auf der Außenseite sowie zwischen den Rädern vom und hinten optimal ausgenutzt werden. Das größte Fassungsvermögen lässt sich dabei erreichen, wenn der Tank im wesentlichen quaderförmig ist, also einen rechteckigen Querschnitt hat.

Bevorzugt ist der Treibstofftank auf Verbindungsstreben zwischen der Stoßstange und dem Fahrzeugrahmen befestigt. Diese Verbindungsstreben bilden einen zusätzlichen Schutz des Tanks gegen Beschädigung von unten.

Der Treibstofftank kann sowohl aus Metall, beispielsweise aus Stahl- oder Aluminium-Blech bestehen, oder auch als Kunststoffteil ausgebildet sein.

Besonders vorteilhaft ist es weiterhin, dass die seitliche Stoßstange bzw. der Rundumschutz im Bereich des Treibstoffstanks erhöht ist, d. h. eine größere Höhe hat. Mit der Erhöhung deckt die Stoßstange den Treibstofftank auf seiner Längserstreckung oder zumindest einen Teil davon seitlich ab, so dass ein verbesserter Schutz gegen seitliche Kollisionen gegeben ist.

Bevorzugt ist der Treibstofftank schwingungsgedämpft am Fahrzeugrahmen angebracht, beispielsweise in Gummidämpfern verschraubt. Dadurch werden schädliche Vibrationen abgehalten.

Eine vorteilhafte Ausführung der Erfindung sieht vor, dass der Tank eine Füllstandsanzeigeeinrichtung hat mit einem außen angebrachten transparenten Schaurohr, welches im oberen und unteren Bereich mit dem Tankinnenraum verbunden ist. Dadurch ist der aktuelle Füllstandspegel des Treibstoffs im Kraftstofftank durch die von außen sichtbare Flüssigkeitssäule in dem Schaurohr mit einem Blick leicht erfassbar.

Im folgenden wird die Erfindung anhand eines Ausführungsbeispiels unter Bezugnahme auf die beiliegenden Zeichnungen näher erläutert. Im einzelnen zeigen:
- Fig. 1: eine schematische Ansicht von oben auf ein erfindungsgemäßes Motorkart;
- Fig. 2: eine Seitenansicht des Motorkarts gemäß Fig. 1;
- Fig. 3: eine Schnittdarstellung durch den Treibstofftank gemäß Fig. 1.

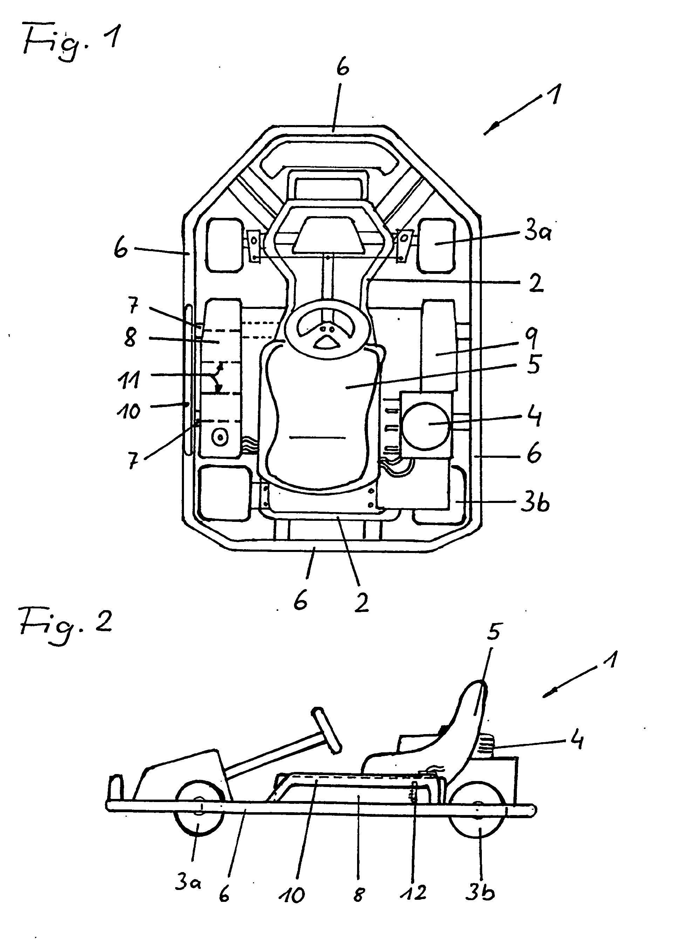

Fig. 1 zeigt schematisch in stark vereinfachter Darstellung eine Draufsicht auf ein Motorkart, welches darin als Ganzes mit dem Bezugszeichen 1 versehen ist.

Ein Fahrzeugrahmen 2, welcher im wesentlichen als flacher, geschweißter Rohrrahmen ausgebildet ist, trägt das Fahrwerk mit den lenkbar aufgehängten Vorderrädern 3a und den Hinterrädern 3b, welche von einem Verbrennungsmotor 4 angetrieben werden, welcher in Fahrtrichtung seitlich auf dem Fahrzeugrahmen 2 montiert ist, und zwar im wesentlichen neben dem Fahrersitz 5. Dieser ist bevorzugt als Schalensitz ausgebildet, welcher zentral auf der Oberseite des Fahrzeugrahmens 2 befestigt ist.

An dem Fahrzeugrahmen 2 sind außen umlaufende Stoßstangen 6 angebracht, welche ihrerseits einen geschlossenen Rundumschutz bilden, der das gesamte Motorkart 1 außenseitig umgibt. Die Befestigung am Fahrzeugrahmen 2 erfolgt über geschraubte oder geschweißte Streben 7.

Erfindungsgemäß ist ein Treibstofftank 8 im mittleren Bereich zwischen dem Vorderrad 3a und dem Hinterrad 3b auf der in der Zeichnung linken Seite zwischen dem Fahrzeugrahmen 2 und der dort seitlich entlang laufenden Stoßstange 6 angebracht. Die Befestigung kann auf den dort verlaufenden Streben 7 erfolgen. Der Treibstofftank 8 kann als quader- bzw. kastenförmiger Blech- oder Kunststofftank ausgeführt sein. Bevorzugt kann er in einem Seitenkasten 9 untergebracht sein, welcher auf der in der Zeichnung rechten Seite ebenfalls angebracht sein kann und dort lediglich als Verkleidung dient.

Über die Längserstreckung des Treibstofftanks 8 ist die Stoßstange 6 durch einen dort angebrachten, nach oben aufragenden Sicherheitsbügel 10 erhöht und verstärkt.

In der Seitenansicht des Motorkarts 1 von Fig. 2 ist deutlich die Anbringung des Treibstofftanks 8 in Höhe des Fahrzeugrahmens 2 erkennbar, und zwar von der Seite aus gesehen hinter der Stoßstange 6 bzw. des Sicherheitsbügels 10.

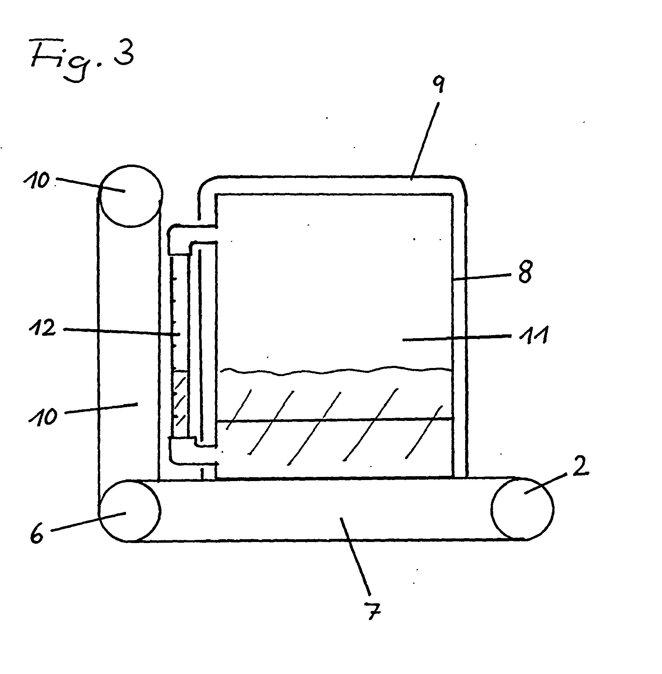

In Fig. 3 ist nochmals eine Schnittdarstellung durch den Treibstofftank 8 dargestellt, der in einem Seitenkasten 9 untergebracht ist und auf einer Strebe 7 zwischen dem Fahrzeugrahmen 2 und der seitlichen Stoßstange 6 montiert ist. Eine Besonderheit dieses Treibstofftanks 8 besteht darin, dass in seinem inneren quer zur Fahrrichtung liegend Schwallbleche 11 eingeschweißt sind. Diese erstrecken sich von der Oberseite des Tanks bis kurz über die Unterseite. Dadurch wird vermieden, dass das in dem Tank 8 enthaltene Benzin beim Bremsen und Beschleunigen sich nicht unkontrolliert vor- und zurückbewegt, wodurch das Fahrzeug destabilisiert werden könnte.

Der Treibstofftank 8 hat weiterhin eine Füllstandsmesseinrichtung mit einem Schaurohr 12, welches aus transparentem, kraftstoffbeständigem Kunststoff besteht und senkrecht stehend auf der Außenseite angebracht ist, wobei es im oberen und unteren Bereich mit dem Tankinneren verbunden ist. Nach der Prinzip der kommunizierenden Röhren stellt sich in diesem Schaurohr ein Flüssigkeitspegel ein, welcher dem aktuellen Kraftstoffpegel in dem Kraftstofftank 8 entspricht. Dieser kann dadurch leicht von außen abgelesen werden.

## Patentansprüche

1. Motorkart mit einem Fahrzeugrahmen (2), welcher das Fahrwerk, einen Verbrennungsmotor (4) als Antriebsmaschine sowie den Treibstofftank (8) trägt und auf dem ein Fahrersitz (5) angebracht ist, und an dem zumindest teilweise außen umlaufende Stoßstangen (6) angebracht sind, **dadurch gekennzeichnet, dass** der Treibstofftank (8) seitlich zwischen dem Fahrzeugrahmen (2) und einer seitlich verlaufenden Stoßstange (6) untergebracht ist.

2. Motorkart nach Anspruch 1, **dadurch gekennzeichnet, dass** der Treibstofftank (8) in einem Seitenkasten (9) integriert ist.

3. Motorkart nach Anspruch 1, **dadurch gekennzeichnet, dass** ein Seitenkasten (9) als Treibstofftank (8) ausgebildet ist.

4. Motorkart nach einem der Ansprüche 1 bis 3, **dadurch gekennzeichnet, dass** der Treibstofftank (8) eine längliche Bauform hat.

5. Motorkart nach einem der Ansprüche 1 bis 4, **dadurch gekennzeichnet, dass** der Treibstofftank (8) im wesentlichen quaderförmig ausgebildet ist.

6. Motorkart nach einem der Ansprüche 1 bis 5, **dadurch gekennzeichnet, dass** der Treibstofftank (8) auf Verbindungsstreben (7) zwischen der Stoßstange (6) und dem Fahrzeugrahmen (2) befestigt ist.

7. Motorkart nach einem der Ansprüche 1 bis 6, **dadurch gekennzeichnet, dass** die seitlich verlaufende Stoßstange (6) im Bereich des Treibstofftanks erhöht ist.

8. Motorkart nach einem der Ansprüche 1 bis 7, **dadurch gekennzeichnet, dass** die seitlich verlaufende Stoßstange (6) im Bereich des Treibstofftanks (8) verstärkt ist.

9. Motorkart nach einem der Ansprüche 1 bis 8, **dadurch gekennzeichnet, dass** in dem Treibstofftank (8) quer zur Fahrtrichtung Schwallbleche (11) angebracht sind.

10. Motorkart nach einem der Ansprüche 1 bis 9, **dadurch gekennzeichnet, dass** der Treibstofftank (8) schwingungsgedämpft am Fahrzeugrahmen (2) angebracht ist.

11. Motorkart nach einem der Ansprüche 1 bis 10, **dadurch gekennzeichnet, dass** der Treibstofftank (8) eine Füllstandsanzeigeeinrichtung hat mit einem außen angebrachten transparenten Schaurohr (12), welches im oberen und unteren Bereich mit dem Tankinnenraum verbunden ist.

## Claims

1. Motorized go-kart having a vehicle frame (2) which supports the rolling mechanism, an internal combustion engine (4) as a drive machine and the fuel tank (8), and to which vehicle frame (2) is attached a driver's seat (5), and to which vehicle frame (2) are attached bumper (6) which run at least part of the way around at the outside, **characterized in that** the fuel tank (8) is accommodated at the side between the vehicle frame (2) and a laterally running bumper (6).

2. Motorized go-kart according to Claim 1,
**characterized in that** the fuel tank (8) is integrated into a case (9).

3. Motorized go-kart according to Claim 1,
**characterized in that** a case (9) is formed as a fuel tank (8).

4. Motorized go-kart according to one of Claims 1 to 3, **characterized in that** the fuel tank (8) is of an elongate design.

5. Motorized go-kart according to one of Claims 1 to 4, **characterized in that** the fuel tank (8) is esentially cuboidal.

6. Motorized go-kart according to one of Claims 1 to 5, **characterized in that** the fuel tank (8) is fastened on connecting struts (7) between the bumper (6) and the vehicle frame (2).

7. Motorized go-kart according to one of Claims 1 to 6, **characterized in that** the laterally running bumper (6) is raised in the region of the fuel tank.

8. Motorized go-kart according to one of Claims 1 to 7, **characterized in that** the laterally running bumper (6) is reinforced in the region of the fuel tank (8).

9. Motorized go-kart according to one of Claims 1 to 8, **characterized in that** baffle plates (11) are attached in the fuel tank (8) so as to run transversely with respect to the direction of travel.

10. Motorized go-kart according to one of Claims 1 to 9, **characterized in that** the fuel tank (8) is attached to the vehicle frame (2) in a vibration-damped fashion.

11. Motorized go-kart according to one of Claims 1 to 10, **characterized in that** the fuel tank (8) has a filling level indicating device with an externally attached transparent display tube (12) which is connected in the upper and lower region to the tank interior space.

## Revendications

1. Kart comprenant un châssis de véhicule (2) qui porte le mécanisme de roulement, un moteur à combustion (4) servant de moteur d'entraînement ainsi que le réservoir de carburant (8) et sur lequel est monté un siège de véhicule (5), et sur lequel sont montés des pare-chocs (6) s'étendant au moins en partie sur la périphérie extérieure, **caractérisé en ce que** le réservoir de carburant (8) est monté latéralement entre le châssis du véhicule (2) et un pare-chocs (6) s'étendant latéralement.

2. Kart selon la revendication 1, **caractérisé en ce que** le réservoir de carburant (8) est intégré dans une caisse latérale (9).

3. Kart selon la revendication 1, **caractérisé en ce qu'**une caisse latérale (9) est réalisée sous forme de réservoir de carburant (8).

4. Kart selon l'une quelconque des revendications 1 à 3, **caractérisé en ce que** le réservoir de carburant (8) a une forme oblongue.

5. Kart selon l'une quelconque des revendications 1 à 4, **caractérisé en ce que** le réservoir de carburant (8) est réalisé essentiellement sous forme parallélépipédique.

6. Kart selon l'une quelconque des revendications 1 à 5, **caractérisé en ce que** le réservoir de carburant (8) est fixé sur des contrefiches de connexion (7) entre le pare-chocs (6) et le châssis du véhicule (2).

7. Kart selon l'une quelconque des revendications 1 à 6, **caractérisé en ce que** le pare-chocs s'étendant latéralement (6) est surélevé dans la région du réservoir de carburant.

8. Kart selon l'une quelconque des revendications 1 à 7, **caractérisé en ce que** le pare-chocs (6) s'étendant latéralement est renforcé dans la région du réservoir de carburant (8).

9. Kart selon l'une quelconque des revendications 1 à 8, **caractérisé en ce que** des tôles de flot (11) sont placées dans le réservoir de carburant (8) transversalement au sens de la marche.

10. Kart selon l'une quelconque des revendications 1 à 9, **caractérisé en ce que** le réservoir de carburant (8) est placé sur le châssis du véhicule (2) de manière à amortir les vibrations.

11. Kart selon l'une quelconque des revendications 1 à 10, **caractérisé en ce que** le réservoir de carburant (8) présente un dispositif d'indication du niveau avec un tube d'inspection transparent (12) monté à l'extérieur qui est connecté dans la région supérieure et inférieure à l'espace intérieur du réservoir.
